# EUROPEAN PATENT APPLICATION

(11) **EP 1 260 350 A2**
(43) Date of publication of application: **27.11.2002**
(21) Application number: 02011445.0
(22) Date of filing: 24.05.2002
(51) Int. Cl.: B29C 65/18, B65B 51/10, B65D 75/42

(54) **Method for molding the container bottom and containers manufactured therewith**

(30) Priority: 25.05.2001 IT BO20010331
(71) Applicant: T.M. di Tiziana Mazza, 40064 Ozzano Emilia (Bologna) (IT)
(72) Inventor: Barufatto, Roberto, 40068 San Lazzaro Di Savena (Bologna) (IT); Barufatto, Simone, 40068 San Lazzaro Di Savena (Bologna) (IT)
(74) Representative: Negrini, Elena

(57) **Abstract**

A method for forming the bottom (3) of a container (2) made of heat-weldable plastic material, including at least a body (4) and a stopper (5) removably associated to an end of the body (4), provides:
- to fill the container (2) through the bottom (3) open with a product to be packaged;
- to squeeze the body (4) in proximity of a remaining end thereof, carrying out a bottom portion (6);
- to heat the bottom portion (6) up to its melting;
- to compress said melted bottom portion (6) according to a direction nearly parallel to the longitudinal axis of the container (2);
- to release the body (4), at least in correspondence of the squeezing and the bottom portion (6).

A container made of heat-weldable plastic material, including at least a body (4) and a stopper (5) removably associated to an end of the body (4), includes a bottom (3) sealed almost with a fin shape and having a shaped end bead (7) transversally positioned in comparison to the longitudinal axis of the container (2), in such way to constitute an abutment for the container (2).

## Description

The present invention relates to the packaging of products, particularly of pharmaceutical and cosmetic type. In particular the invention refers to a method for moulding the container bottom and the containers manufactured therewith.

There are known containers made of heat-weldable plastic material, having open bottom ends, in order to fill the containers with a product; said ends are afterwards closed and moulded by thermo-sealing operations.

The closing and moulding operations generally provide to close and squeeze the container bottom portion by using pliers and melting means, which provide to quickly heat said portion up to their melting. The closing movement is executed according to a direction normally orthogonal to the container longitudinal axis. In order to minimize the sealing time, the melting means usually work at very high temperatures.

After the melting, the bottom portion is moulded with a fin or winglet shape having a substantially flat section, by further squeezing and compression.

Said method is used particularly for closing and sealing containers reciprocally interconnected to form strips of single containers.

The monodose containers strips, largely used in the pharmaceutical and cosmetic industry, are characterized by connecting and linking appendixes or fins, which preferably connect the head portion and the middle portion of the containers. Each couple of linking fins has a weakening groove, with a shape more or less complex, which allows the following separation of the single monodose container from the strip.

The head and middle fins, which are on the external containers of the strip, may have transversal flat flanges, constituting the abutment surfaces needed for moving the strips in single file on the conveyors, each strip being pushed by the preceding one.

The main drawback of the known methods for moulding the container bottoms consists in manufacturing end portions sealed and moulded with a fin or winglet shape with substantially flat section, whose extension in direction orthogonal to the container axis is the smallest in comparison to the remaining dimensions, and which can have sharp edges and/or cutting profiles.

Further drawback of the known methods consists in requiring in order to melt the container bottoms, a very high temperature heating, which limits the typology of the products dosable into the container, since such heating causes a significant thermal sudden changes.

A drawback of the known containers, whose bottom is moulded according to said known methods, consists in said bottom not constituting a steady support base fit for the vertical steady position of the container, single or in strip.

Another drawback of the known containers consists in the substantially flat shape of the bottom not constituting an abutment surface sufficient to allow the container transfer in a single line, each container being pushed by the preceding one according to a direction parallel to the longitudinal axis of the containers. In case of container strips, this restriction requires, in order to perform a single line transfer, the use of particular strips, having additional fins or winglets and shaped in such a way to constitute an abutment surface.

The main object of the present invention is to propose a method for moulding the container bottoms, which allows carrying out an end portion sealed with a fin or winglet shape, having an end bead with different shapes, according to the specific requirements.

Another object is to propose a method, which allows carrying out sealed bottoms, and particularly end beads, having rounded shape, without sharp edges and/or cutting profiles.

Further object of the present invention is to propose a container whose bottom is sealed and moulded in such a way to constitute a steady support base for the container, single or in strip, such to allow this latter to self sustain in vertical position.

Another object is to propose containers whose bottom is sealed and moulded carrying out an abutment surface sufficient to allow their transfer in single line, each container being pushed by the preceding one according to a direction parallel to the container longitudinal axis.

Another object is to propose a method providing a progressive heating with predefined and different time and heating temperatures, of reduced value, fit for reducing the thermal sudden change acting on the product to be packaged, inside the container.

The above-mentioned objects are achieved according to the content of the claims.

The characteristics of the present invention are underlined in the following with particular reference to the attached drawing tables, in which:
- figure 1 shows a front view of a container strip in correspondence of a final moulding condition;
- figure 2 shows a bottom view of the container strip of figure 1;
- figure 3 shows a section view according to the plain III-III of figure 1;

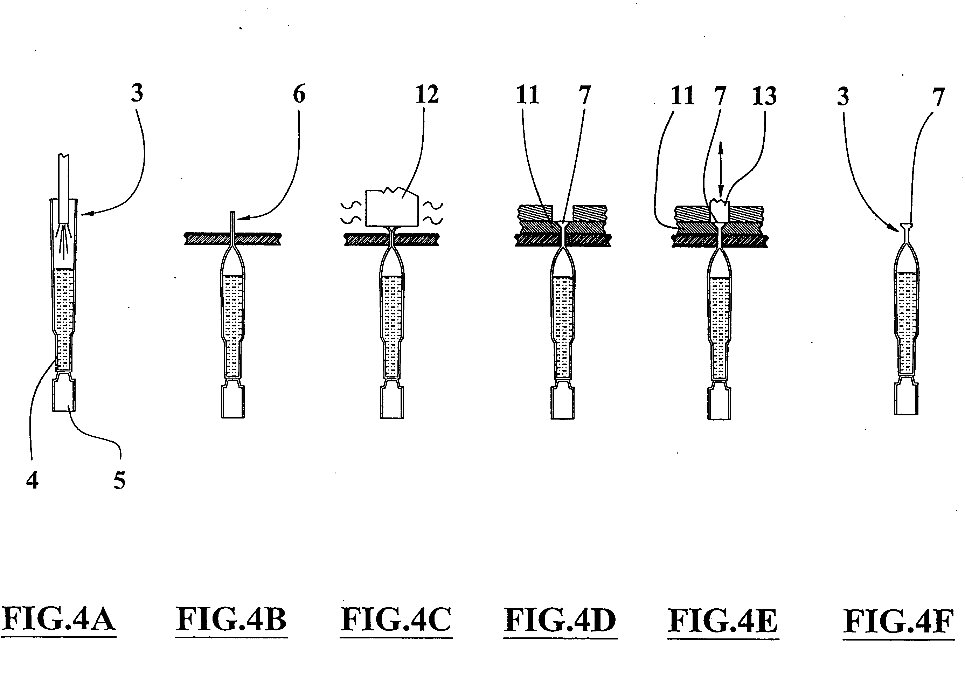

- figures 4a - 4f show front enlarged section views of a container respectively in a filling condition, a closing condition, a melting and compression condition, an open moulding condition, a closed moulding condition and a final moulding condition;
- figures 5a - 5d show enlarged side views of variants of the container;
- figure 6 shows a perspective view of the container strip of figure 1.

With reference to figures from 4a to 4f, the method for moulding the bottom 3 of a container 2, made of heat-weldable plastic material, having a body 4, with tubular section, and a stopper 5, removably associated to an end of said body 4, provides:
- to fill the container 2 with a product to be packaged, through the bottom 3 open, in a filling condition;
- to squeeze the body 4 in proximity of remaining end thereof, carrying out a bottom portion 6, in correspondence a squeezing condition;
- to heat the bottom portion 6 up to partial melting thereof;
- to compress said melted bottom portion 6 according to a direction almost parallel to the longitudinal axis of the container 2, in correspondence of a bottom moulding condition;
- to release the body 4 from the squeezing condition and the bottom portion 6.

The heating of the bottom portion 6 can be carried out in a progressive way, according to a sequence of separate phases, having different duration time and diverse heating temperatures. Melting means 12, which also melt said bottom portion 6, compress the melted bottom portion 6.

It is provided to compress the melted bottom portion 6 also using moulding means 11, which act in direction transversal with respect to a longitudinal axis of the container 2. The moulding means 11 may have different profiles for plastically moulding the melted bottom portion 6 with different sections, for instance triangular, circular or bracket shaped.

It is provided to further compress the melted bottom portion 6 in direction almost parallel to the longitudinal axis of the container 2, using punching means 13.

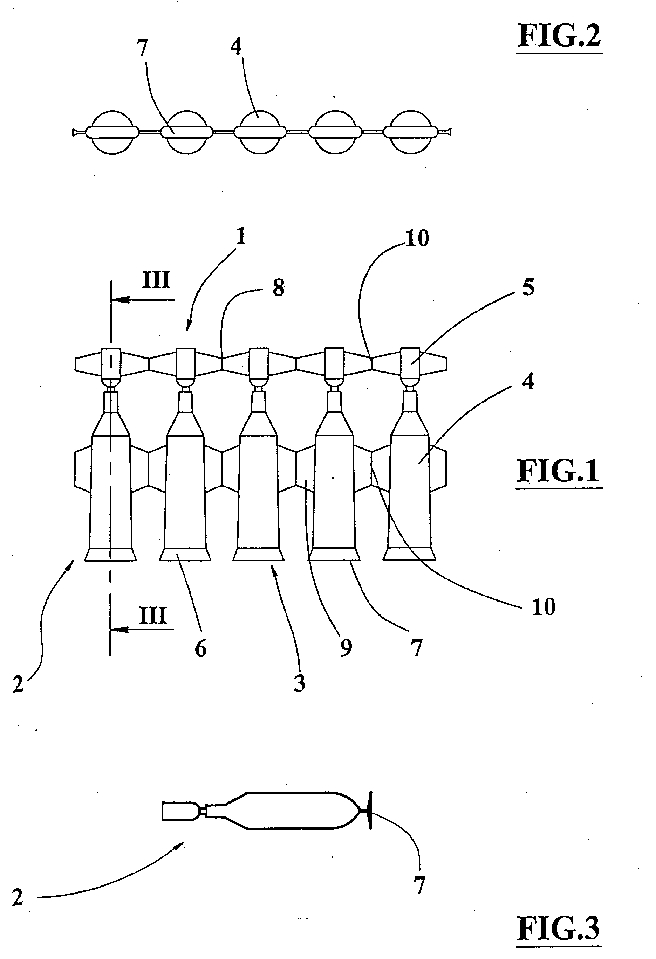

With reference to figures 1, 2 and 3, numeral 2 indicates a container made of heat-weldable plastic material, having a body, constituted by a body 4 and a stopper 5, removably associated to an end of said body 4, and having a bottom 3 moulded and sealed with a fin shape, characterized by a foot shaped end bead 7, with nearly triangular section and having a support base transversally positioned with respect to the longitudinal axis of the container 2.

The container can be assembled in strips 1 of containers 2, mutually linked by means of set of head fins 8 and middle fins 9, each couple of fins having weakening grooves 10, for the following separation of the single container 2 from the strip.

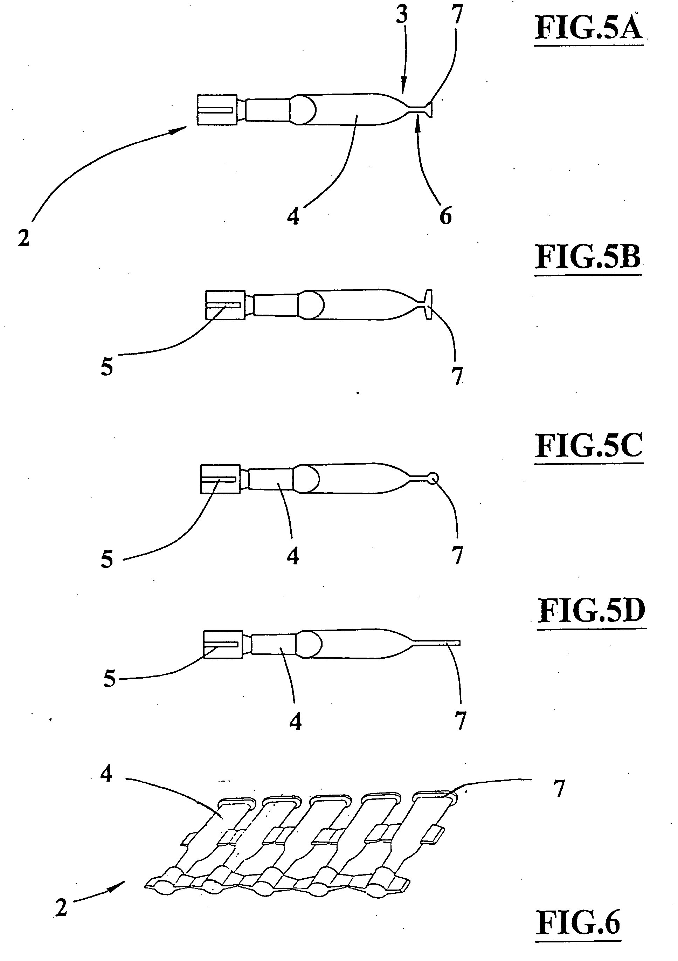

A container variant, shown in figure 5b, provides the end bead 7 with bracket shape having a side positioned transversally to the longitudinal axis of the container 2 and such dimensions to constitute a steady support base for this latter, single or in strip, in order to allow the container 2 to self sustain in vertical position.

Another container variant, shown in figure 5c, provides the end bead 7 having section almost circular.

A further variant of the container 2, shown in figure 5d, provides the end bead 7 flat and the sealed bottom 3 having an almost constant thickness.

The characteristic execution of the sealing and moulding of the melted bottom portion 6, allow besides carrying out an end bead 7 having rounded shape, without sharp edges or cutting profiles.

The main advantage of the present invention is to provide a method for moulding the container bottoms, which allows carrying out a end portion sealed with fin or winglet shape, and having a transversal flange transversally positioned in comparison to the container longitudinal axis.

Another advantage is to provide a method, which allows carrying out welded bottom, having rounded shapes, without sharp edges and/or cutting profiles.

Another advantage is to provide a method providing a progressive heating, with predefined and different time and heating temperatures, of reduced value, fit to reduce the thermal sudden change acting on the product to be packaged, which is inside the container.

Further advantage of the present invention consists in providing a container whose bottom is sealed and moulded in such a way to constitute a steady support base for the container, single or in strip, such to allow the container to self sustain in vertical position.

Another advantage is to provide containers whose bottom is sealed and moulded carrying out an abutment surface sufficient to allow the container transfer in single line, each containers being pushed by that preceding one, according to a direction parallel to the container longitudinal axis.

## Claims

1. Method for forming the bottom (3) of a container (2) made of heat-weldable plastic material, including at least a body (4) and a stopper (5) removably associated to an end of the body (4), said method **characterized in that** provides:
- to fill the container (2) through the bottom (3) open with a product to be packaged;
- to squeeze the body (4) in proximity of remaining end thereof, carrying out a bottom portion (6);
- to heat the bottom portion (6) up to its melting;
- to compress said melted bottom portion (6) according to a direction nearly parallel to the longitudinal axis of the container (2);
- to release the body (4), at least in correspondence of the squeezing and the bottom portion (6).

2. Method according to claim 1 **characterized in that** provides to heat the bottom portion (6) progressively with predefined different times and heating temperatures.

3. Method according to claim 1 **characterized in that** provides to compress the melted bottom portion (6) through melting means (12), which melt said bottom portion (6).

4. Method according to claim 1 **characterized in that** provides to further compress the melted bottom portion (6) through moulding means (11), operating in direction almost transversal to the longitudinal axis of the container (2).

5. Method according to claim 1 **characterized in that** provides to further compress the melted bottom portion (6), through punching means (13), operating according to a direction almost parallel to the longitudinal axis of the container (2).

6. Container made of heat-weldable plastic material, including at least a body (4) and a stopper (5) removably associated to an end of the body (4), **characterized in that** includes a bottom (3) sealed almost with a fin shape and having a shaped end bead (7) transversally positioned in comparison to the longitudinal axis of the container (2), in such way to constitute an abutment for this latter.

7. Container according to claim 6 **characterized in that** the shaped end bead (7) has an almost triangular or rectangular section with transversal extension and the abutment constitutes a support base for the container (2).

8. Container according to claim 6 **characterized in that** the end bead (7) has almost circular or extended rectangular section.

9. Container according to any of the claims from 6 to 8 **characterized in that** is assembled in strips (1) of containers (2) mutually linked by means of set of head fins (8) and middle fins (9), each couple of fins having weakening grooves (10) fit for making easier the separation of the single container (2) from the strip

10. Container according to claim 6 **characterized in that** the end bead (7) has rounded shape and is without sharp or cutting edges or profiles.
